# EUROPÄISCHE PATENTSCHRIFT

(11) **EP 3 539 804 B1**
(45) Veröffentlichungstag und Bekanntmachung des Hinweises auf die Patenterteilung: **12.07.2023**
(21) Anmeldenummer: 19161208.4
(22) Anmeldetag: 07.03.2019
(51) Int. Cl.: B60H 1/22, F23N 5/24

(54) **FAHRZEUGHEIZSYSTEM**
VEHICLE HEATING SYSTEM
SYSTÈME DE CHAUFFAGE DE VÉHICULE

(30) Priorität: 12.03.2018 DE 102018105585; 27.03.2018 DE 102018107216
(43) Veröffentlichungstag der Anmeldung: 18.09.2019
(73) Patentinhaber: Eberspächer Climate Control Systems GmbH, 73730 Esslingen (DE)
(72) Erfinder: Peitz, Maximilian, 73230 Kirchheim unter Teck (DE); Barthel, Frank, 75233 Tiefenbronn (DE); Roppelt, Oliver, 73779 Deizisau (DE); Jensen, Hans, 73265 Dettingen unter Teck (DE)
(74) Vertreter: Ruttensperger Lachnit Trossin Gomoll

(56) Entgegenhaltungen:
- DE-A1-102006 019 948
- DE-A1-102013 201 989
- DE-A1-102014 200 170

## Beschreibung

Die vorliegende Erfindung betrifft ein Fahrzeugheizsystem gemäß dem Oberbegriff des Anspruchs 1, umfassend ein brennstoffbetriebenes Heizgerät mit einem Brennerbereich, einem Verbrennungsluftgebläse zum Fördern von Verbrennungsluft zu dem Brennerbereich, einer Brennstoffpumpe zum Fördern von Brennstoff zu dem Brennerbereich und einer Ansteueranordnung zum Ansteuern des Verbrennungsluftgebläses und der Brennstoffpumpe, sowie ein Verfahren zum Betreiben eines derartigen Fahrzeugheizsystems. Die Erfindung betrifft ferner ein Verfahren zum Betreiben eines Fahrzeugheizsystems.

Beispielsweise bei geländegängigen Fahrzeugen kann nicht ausgeschlossen werden, dass diese phasenweise in einem Watzustand betrieben werden, also einem Zustand, in welchem das Fahrzeug in Wasser bewegt wird und somit grundsätzlich die Gefahr besteht, dass Wasser über Öffnungen in verschiedene Systembereiche eines Fahrzeugs eindringt und diese schädigt. Auch bei herkömmlichen Fahrzeugen kann ein derartiger Zustand beispielsweise bei Straßenüberschwemmungen oder bei Aufnahme eines Bootes auf einem Bootsanhänger auftreten.

Ein Fahrzeugheizsystem gemäß dem Oberbegriff des Anspruchs 1 ist aus der DE 10 2014 200 170 A1 bekannt.

Es ist die Aufgabe der vorliegenden Erfindung, ein Fahrzeugheizsystem und ein Verfahren zum Betreiben eines Fahrzeugheizsystems vorzusehen, mit welchen durch einen Watzustand hervorgerufene Schäden am Fahrzeugheizsystem vermieden werden.

Gemäß einem Aspekt der vorliegenden Erfindung wird diese Aufgabe gelöst durch ein Fahrzeugheizsystem gemäß Anspruch 1. Dieses Fahrzeugheizsystem umfasst ein brennstoffbetriebenes Heizgerät mit einem Brennerbereich, einem Verbrennungsluftgebläse zum Fördern von Verbrennungsluft zu dem Brennerbereich, einer Brennstoffpumpe zum Fördern von Brennstoff zu dem Brennerbereich und einer Ansteueranordnung zum Ansteuern des Verbrennungsluftgebläses und der Brennstoffpumpe, wobei die Ansteueranordnung dazu ausgebildet ist, bei Empfang einer Watzustandsinformation das Verbrennungsluftgebläse und die Brennstoffpumpe zur Durchführung eines Watbetriebs anzusteuern.

Bei dem erfindungsgemäßen Fahrzeugheizsystem werden bei Auftreten oder der Gefahr des Auftretens eines Watzustands Maßnahmen ergriffen, die das Heizgerät vor dem Eindringen von Wasser schützen.

Diese Maßnahmen können beispielsweise vorsehen, dass die Ansteueranordnung dazu ausgebildet ist, zur Durchführung des Watbetriebs das Verbrennungsluftgebläse zum Betrieb mit einer Watbetriebsdrehzahl oder/und einer Watbetriebsförderrate anzusteuern und die Brennstoffpumpe außer Betrieb zu setzen oder/und außer Betrieb zu halten. Durch den durch Fördern von Verbrennungsluft bzw. Luft generierten Luftdruck wird ein das Eindringen von Wasser über eine Abgasanlage bzw. einen Abgasaustrittsbereich des Heizgeräts verhindernder Gegendruck aufgebaut. Da die Brennstoffpumpe deaktiviert wird bzw. bleibt, wird das Austreten von unverbranntem Brennstoff verhindert. Die voranstehenden Ausführungen zeigen, dass das Durchführen eines Watbetriebs bzw. die entsprechende Ansteuerung des Verbrennungsluftgebläses und der Brennstoffpumpe auch einen Zustand umfassen kann, in welchem die zuvor bei deaktiviertem Heizgerät nicht betriebene Brennstoffpumpe außer Betrieb bleibt. Auch dieses außer Betrieb halten der Brennstoffpumpe stellt im Sinne der vorliegenden Erfindung im Kontext des Watbetriebs ein Ansteuern der Brennstoffpumpe dar.

Zur Bereitstellung der einen vorliegenden Watzustand oder einen geplanten Watzustand anzeigenden Information ist wenigstens eine Watzustandsinformationserzeugungsanordnung zur Erzeugung und Eingabe der Watzustandsinformation in die Ansteueranordnung vorgesehen, wobei die Watzustandsinformationserzeugungsanordnung wenigstens einen Watzustandssensor umfasst.

Für eine zuverlässige Erfassung eines Watzustands umfasst bei einer erfindungsgemäßen Ausgestaltung wenigstens ein Watzustandssensor einen Wasserstandssensor. Dabei kann wenigstens ein Wasserstandssensor im Bereich eines Abgasaustrittsbereichs einer dem Heizgerät zugeordneten Abgasanlage angeordnet sein. Alternativ oder zusätzlich kann am Frontbereich oder/und am Heckbereich eines Fahrzeugs ein derartiger Wasserstandssensor angeordnet sein.

Bei einer weiteren erfindungsgemäßen Ausgestaltung Ausgestaltungsform umfasst ein Watzustandssensor einen eine Temperatur von Verbrennungsabgasen erfassenden und ein Information über das Vorhandensein oder die Qualität eines Verbrennungszustandes wiedergebendes Temperatursignal ausgebenden Temperatursensor des Heizgeräts. Ein derartiger Temperaturfühler kann im Bereich eines Abgasaustrittsbereichs des Heizgeräts oder/und im Bereich eines Abgasaustritts einer Abgasanlage des Heizgeräts angeordnet sein.

Wenn die Watzustandsinformationserzeugungsanordnung wenigstens einen durch eine Bedienperson betätigbaren Watzustandsschalter umfasst, kann einer Bedienperson, also z.B. dem Fahrer eines Fahrzeugs, die Möglichkeit gegeben werden, bereits vor dem Auftreten eines Watzustands das Fahrzeugheizsystem auf diesen Zustand vorzubereiten.

Ferner kann die Watzustandsinformationserzeugungsanordnung ein Fahrzeugsteuergerät umfassen, das die Watzustandsinformation in ein Fahrzeugdatenbussystem eingespeist. Diese Information kann das Fahrzeugsteuergerät beispielsweise auf der Grundlage von Sensorsignale in diese einspeisen Sensoren, die im Sinne der vorliegenden Erfindung dann auch als Watzustandssensoren wirksam sein können, generieren. Eine Ansteueranordnung des Heizgeräts kann diese Information aus dem Fahrzeugdatenbussystem abgreifen und erforderlichenfalls das Heizgerät in einen Watbetrieb versetzen.

Gemäß einem weiteren Aspekt wird die Aufgabe gelöst durch ein Verfahren gemäß Anspruch 6 zum Betreiben eines Fahrzeugheizsystems, vorzugsweise eines erfindungsgemäß aufgebauten Fahrzeugheizsystems, das Fahrzeugheizsystem umfassend ein brennstoffbetriebenes Heizgerät mit einem Brennerbereich, einem Verbrennungsluftgebläse zum Fördern von Verbrennungsluft zu dem Brennerbereich, einer Brennstoffpumpe zum Fördern von Brennstoff zu dem Brennerbereich und einer Ansteueranordnung zum Ansteuern des Verbrennungsluftgebläses und der Brennstoffpumpe, umfassend die Maßnahmen:
a) Erzeugen einer einen vorliegenden oder geplanten Watzustand eines Fahrzeugs indizierenden Watzustandsinformation und Eingeben der Watzustandsinformation in die Ansteueranordnung,
b) nach Empfang oder/und Verarbeitung der Watzustandsinformation in der Ansteueranordnung, Ansteuern des Verbrennungsluftgebläses und der Brennstoffpumpe zur Durchführung eines Watbetriebs.

Bei der Maßnahme b) kann das Verbrennungsluftgebläse mit einer Watbetriebsdrehzahl oder/und einer Watbetriebsförderrate, beispielsweise einer maximal möglichen Drehzahl, betrieben werden, und die Brennstoffpumpe kann zum Vermeiden der Abgabe von unverbranntem Brennstoff nach außen außer Betrieb gesetzt oder/und außer Betrieb gehalten werden.

Bei der Maßnahme a) kann die Watzustandsinformation durch Betätigung eines Watzustandsschalters erzeugt werden.

Zur Erhöhung der Betriebssicherheit ist bei einer erfindungsgemäßen Ausgestaltung des Verfahrens vorgesehen, dass bei der Maßnahme a) die Watzustandsinformation durch wenigstens einen einen Wasserstand im Bereich eines Fahrzeugs erfassenden Wasserstandssensor erzeugt wird.

Bei einer baulich einfach zu realisierenden erfindungsgemäßen Variante wird bei der Maßnahme a) die Watzustandsinformation durch einen eine Temperatur von Verbrennungsabgasen erfassenden und ein Information über das Vorhandensein oder die Qualität eines Verbrennungszustandes wiedergebendes Temperatursignal ausgebenden Temperatursensor des Heizgeräts erzeugt. Hierzu kann beispielsweise die zeitliche Entwicklung eines eine Temperatur im Bereich dieses auch als Flammfühler bezeichneten Temperatursensors wiedergebenden Ausgangssignals, also Temperatursignals, derart ausgewertet werden, dass dann, wenn ein Gradient des Ausgangssignals einen vorbestimmten negativen Schwellenwert unterschreitet, das Vorliegen eines Watzustands erkannt wird.

Die Erfindung betrifft ferner ein Fahrzeug, umfassend ein vorzugsweise mit einem erfindungsgemäßen Verfahren betriebenes Fahrzeugheizsystem mit erfindungsgemäßem Aufbau.

Bei einem derartigen Fahrzeug ist vorzugsweise vorgesehen, dass ein Verbrennungslufteintrittsbereich des Verbrennungsluftgebläses in einer Höhenrichtung über einem Abgasaustrittsbereich des Brennerbereichs oder/und einem Abgasaustrittsbereich einer dem Heizgerät zugeordneten Abgasanlage angeordnet ist. Somit kann das Eindringen von Wasser über den Verbrennungslufteintrittsbereich verhindert werden.

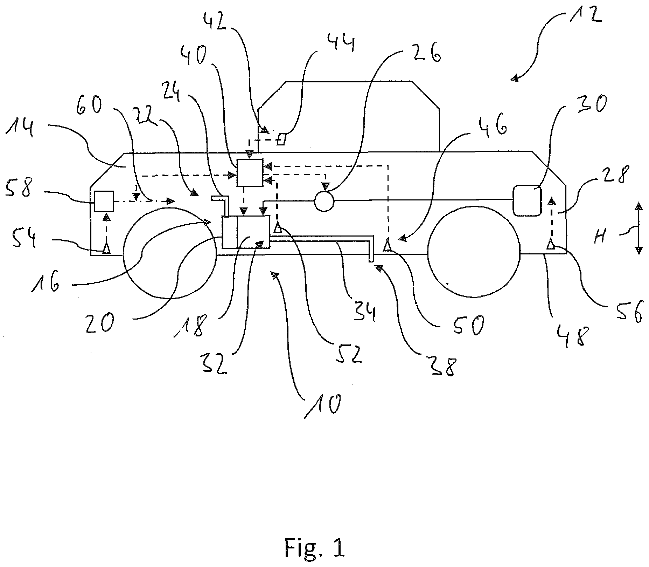

Die Erfindung wird nach folgend mit Bezug auf die Fig. 1 beschrieben, welche in prinzipieller Darstellung ein mit einem Fahrzeugheizsystem ausgestattetes Fahrzeug zeigt.

In Fig. 1 ist ein mit einem Fahrzeugheizsystem 10 ausgestattetes Fahrzeug allgemein mit 12 bezeichnet. Das Fahrzeugheizsystem 10 umfasst ein beispielsweise in oder nahe einem in einem Frontbereich 14 des Fahrzeugs 12 vorgesehenen Motorraum angeordnetes, brennstoffbetriebenes Heizgerät 16. Das Heizgerät 16 umfasst einen Brennerbereich 18 mit einer darin gebildeten Brennkammer und einem Wärmetauscherbereich, in welchem die im Heizgerät 16 generierte Verbrennungswärme auf zu erwärmendes Medium, beispielsweise die in einen Fahrzeuginnenraum einzuleitende Luft, übertragen werden kann. Ferner umfasst das Heizgerät 16 ein Verbrennungsluftgebläse 20, durch welches die zur Verbrennung erforderliche Verbrennungsluft in den Brennerbereich 18 gefördert werden kann. Das Verbrennungsluftgebläse 20 umfasst einen Verbrennungslufteintrittsbereich 22, der beispielsweise unmittelbar an einem Gehäuse des Verbrennungsluftgebläses 20 oder an einem davon wegführenden Verbrennungsluftleitungsbereich 24 vorgesehen sein kann.

Der für die Verbrennung mit der Verbrennungsluft erforderliche Brennstoff wird durch eine Brennstoffpumpe 26 aus einem beispielsweise in oder nahe einem Heckbereich 28 des Fahrzeugs 12 positionierten Tank 30 in den Brennerbereich 18 gefördert.

Das in der Brennkammer des Brennerbereichs 18 entstehende Gemisch aus Verbrennungsluft und Brennstoff wird verbrannt und die dabei entstehenden Verbrennungsabgase verlassen das Heizgerät 16 über einen Abgasaustrittsbereich 32 bzw. eine diesem nachgeschaltete Abgasanlage 34. Die Abgasanlage 34 kann beispielsweise einen Schalldämpfer oder/und eine Abgasreinigungsanordnung umfassen und gibt das aus dem Brennerbereich 18 ausgestoßene Abgas über einen Abgasaustrittsbereich 38 zur Umgebung hin ab.

Das Fahrzeugheizsystem 10 umfasst in Zuordnung zu dem Heizgerät 16 eine Ansteueranordnung 40, welche beispielsweise auch in das Heizgerät 16 integriert sein kann. Diese ist dazu ausgebildet, durch Ansteuerung insbesondere des Verbrennungsluftgebläses 20 und der Brennstoffpumpe 26 den Betrieb des Heizgeräts 16 zu steuern bzw. aufgrund von Rückkopplungsinformation zu regeln. Insbesondere kann die Ansteueranordnung 40 dazu ausgebildet sein, durch Anlegen einer geeigneten Spannung das Verbrennungsluftgebläse 20 mit einer für einen bestimmten Heizbetrieb erforderlichen Drehzahl bzw. Förderrate zu betreiben. Zur Einleitung der für einen gewünschten Verbrennungsbetrieb erforderlichen Brennstoffmenge kann die Ansteueranordnung 40 dazu ausgebildet sein, die Brennstoffpumpe 26, welche beispielsweise als Dosierpumpe mit einem hin und her bewegbaren Kolben ausgebildet sein kann, so anzusteuern, dass zur Förderung der erforderlichen Brennstoffmenge diese mit einer entsprechenden Taktfrequenz arbeitet.

Wird ein derartiges Fahrzeug 12 in einem Watzustand betrieben, also einem Zustand, in welchem vor allem der untere Bereich des Fahrzeugs 12 in Wasser bewegt wird oder im Wasser steht und somit die potentielle Gefahr besteht, dass über die Abgasanlage 34 Wasser in das Heizgerät 16 gelangen und dieses schädigen könnte, wird das Fahrzeugheizsystem 10 in einen Zustand versetzt, in welchem es in einem Watbetrieb arbeitet.

Hierzu ist es zunächst erforderlich, durch eine allgemein mit 42 bezeichnete Watzustandsinformationserzeugungsanordnung Information bereitzustellen und in die Ansteueranordnung 40 einzugeben, so dass die Ansteueranordnung 40 das Heizgerät 16 schützende Maßnahmen ergreifen kann.

Die Watzustandsinformationserzeugungsanordnung 42 kann beispielsweise einen Watzustandsschalter 44 umfassen. Dieser kann im Bereich eines Armaturenbretts des Fahrzeugs 12 untergebracht sein und gibt dem Fahrer des Fahrzeugs 12 die Möglichkeit, durch Betätigung des Watzustandsschalters 44 eine Watzustandsinformation zu generieren, welche in die Ansteueranordnung 40 eingegeben wird. Beruhend auf dieser Watzustandsinformation steuert die Ansteueranordnung 40 das Heizgerät 12 zum Übergang in den Watbetrieb derart an, dass das Verbrennungsluftgebläse 20 beispielsweise mit einer für den Watbetrieb vorgegebenen Drehzahl bzw. Förderrate betrieben wird. Beispielsweise kann diese Drehzahl einer sehr hohen oder für das Verbrennungsluftgebläse 20 bzw. ein durch einen Elektromotor angetriebenes Förderrad desselben maximal möglichen Drehzahl entsprechen, um eine größtmögliche Menge an Luft in den Brennerbereich 18 und über diesen in die Abgasanlage 34 zu fördern. Hierzu kann die Ansteueranordnung 40 beispielsweise dazu ausgebildet sein, eine Betriebsspannung mit für den Watbetrieb vorgegebenem Tastverhältnis an den Elektromotor des Verbrennungsluftgebläses 20 anzulegen.

Bei Übergang in den Watbetrieb steuert die Ansteueranordnung 40 die Brennstoffpumpe 26 derart an, dass diese, sofern sie zuvor für die Durchführung eines Verbrennungsbetriebs des Heizgeräts 20 in Betrieb gesetzt war, außer Betrieb gesetzt wird und somit das Fördern von Brennstoff in den Brennerbereich 18 eingestellt wird. War die Brennstoffpumpe 26 vor Eingang der Watzustandsinformation nicht in Betrieb, was bedeutet, dass das Heizgerät 16 gleichermaßen nicht im Heizbetrieb betrieben wurde, so wird für den Watbetrieb bzw. im Watbetrieb die Brennstoffpumpe 26 durch die Ansteueranordnung 40 außer Betrieb gehalten, was letztendlich bedeutet, dass an die Brennstoffpumpe 26 kein diese in Betrieb setzendes Ansteuersignal ausgegeben wird.

Durch das Einstellen bzw. Verhindern einer Brennstoffförderung in den Brennerbereich 18 im Watbetrieb wird dafür gesorgt, dass im Watbetrieb kein unverbrannter Brennstoff in die Abgasanlage 34 und über diese in die Umgebung abgegeben wird. Da bei Auftreten eines Watzustands und beispielsweise geringfügiges Eindringen von Wasser über die Abgasanlage 34 aufgrund des ansteigenden Gegendrucks eine Verbrennung im Brennerbereich 18 unter geordneten Zuständen nicht möglich wäre bzw. zum Erliegen käme, wird bei Übergang in den Watbetrieb aktiv dafür gesorgt, dass die Verbrennung in definierter Art und Weise beendet wird.

Durch die Betätigung des Watzustandsschalters 44 kann der Fahrer des Fahrzeugs 12 bereits dann, wenn die Gefahr eines Watzustands erkennbar ist oder in beabsichtigter Weise ein Watzustand herbeigeführt werden soll, antizipierend das Fahrzeugheizsystem 10 bzw. dessen Heizgerät 16 in den Watbetrieb versetzen. Nach Beendigung des Watbetriebs kann durch erneute Betätigung des Watzustandsschalters 44 die Erzeugung der Watzustandsinformation beendet werden bzw. eine Information generiert werden, welche für die Ansteueranordnung 40 zu erkennen gibt, dass der Watzustand beendet ist und, sofern erforderlich, der normale Betrieb des Heizgeräts 16 wieder aufgenommen werden kann.

Um alternativ oder zusätzlich zur Erzeugung der Watzustandsinformation durch den Watzustandsschalter 44 der Ansteueranordnung 40 Information bereitstellen zu können, welche das Auftreten oder Vorliegen eines Watzustands indiziert, umfasst die Watzustandsinformationserzeugungsanordnung 42 zumindest einen allgemein mit 46 bezeichneten Watzustandssensor. Dieser kann beispielsweise einen nahe dem Abgasaustrittsbereich 38, also auch nahe einem Unterboden 48 des Fahrzeugs 12 angeordneten Wasserstandssensor 50 umfassen. Der Wasserstandssensor 50 kann beispielsweise dazu ausgebildet sein, einen diesen erreichenden Wasserstand zu indizieren und dementsprechend eine Watzustandsinformation in die Ansteueranordnung 40 einzugeben. Dazu kann beispielsweise der Wasserstandssensor 50 als Wasserfühler oder mit einem Schwimmer ausgebildet sein, welcher bei Auftreten eines entsprechend hohen Wasserpegels einen elektrischen Kontakt schließt oder unterbricht. Auch die Ausgestaltung eines derartigen Wasserstandssensors als Temperatursensor ist grundsätzlich möglich. Auch bei Erzeugung der Watzustandsinformation auf diese, sensorisch erfasste Weise kann die Ansteueranordnung 40 die vorangehend betriebenen Maßnahmen ergreifen, um das Heizgerät 16 in den Watbetrieb zu versetzen.

Alternativ oder zusätzlich kann ein dem Heizgerät 16 zugeordneter und als Temperatursensor ausgebildeter Flammfühler 52 als Watzustandssensor 46 genutzt werden, um eine dem Auftreten eines Watzustands entsprechende Information in die Ansteueranordnung 40 einzugeben. Ein derartiger Flammfühler kann am Heizgerät 16 beispielsweise nahe dem Abgasaustrittsbereich 32 des Brennerbereichs 18 oder nahe dem Abgasaustrittsbereich 38 der Abgasanlage 34 positioniert sein, um grundsätzlich durch Erfassung der Temperatur der Verbrennungsabgase auf die Qualität oder das Vorhandensein eines Verbrennungszustands schließen zu können bzw. entsprechende Information in Form eines Temperatursignals auszugeben. Tritt ein Watzustand auf, bei welchem durch einen ansteigenden Wasserpegel insbesondere bei laufendem Verbrennungsbetrieb Wasser in die Abgasanlage 34 eindringt und auch den Flammfühler 52 erreicht, so wird dieser durch das Wasser spontan gekühlt. Dies führt dazu, dass das von dem Flammfühler 52 ausgegebene Temperatursignal einen abrupten Temperaturabfall anzeigt, welcher das Auftreten eines Watzustands indiziert. Durch Auswertung des Temperatursignals, beispielsweise in der Ansteueranordnung 40, insbesondere des zeitlichen Gradienten des Temperatursignals, kann dann, wenn dieser aufgrund des starken Abfalls der Temperatur und somit des Temperatursignals einen vorbestimmten negativen Schwellenwert unterschreitet, auf das Auftreten eines Watzustands geschlossen werden, woraufhin die Ansteueranordnung 40 dann das Heizgerät 16 in der voranstehend beschriebenen Art und Weise in den Watbetrieb versetzen kann.

Auch dann, wenn das Heizgerät 16 nicht im Verbrennungsbetrieb war und der Flammfühler 52 ein Temperatursignal ausgibt, welches eine Temperatur wiedergibt, die zu diesem Zeitpunkt im Bereich des Heizgeräts 16 vorliegt und beispielsweise nahe oder aufgrund der Positionierung im Motorraum 14 etwas über der Umgebungstemperatur sein kann, führt das Eindringen von Wasser in die Abgasanlage 34 dann, wenn dieses Wasser den Flammfühler 52 erreicht, aufgrund des Umstandes, dass dieses Wasser im Allgemeinen eine von der Umgebungstemperatur sich unterscheidende Temperatur aufweist, zu einer entsprechend abrupten Änderung in der vom Flammfühler 52 erfassten Temperatur und einem entsprechend starken Abfall des Temperatursignals, der durch Auswertung des Temperaturgradienten in der vorangehend beschriebenen Art und Weise detektiert und als Indikator für das Auftreten eines Watzustands herangezogen werden kann.

Das in Fig. 1 dargestellte Fahrzeug 12 weist ferner in seinem Frontbereich 14 und seinem Heckbereich 28 beispielsweise im Bereich einer Frontschürze bzw. einer Heckschürze jeweils einen einen Watzustandssensor 46 bereitstellenden oder als solcher genutzten Wasserstandssensor 54, 56 auf. Bewegt sich das Fahrzeug 12 auf abschüssigem Gelände vorwärts oder rückwärts in Wasser hinein, so wird das Fahrzeug mit den Bereichen, in welchen die Wasserstandssensoren 54, 56 angeordnet sind, zuerst in Kontakt mit Wasser kommen, wobei ein zuvor bereits vorhandener Kontakt der Räder des Fahrzeugs mit Wasser unberücksichtigt bleibt. Die bei Kontakt mit Wasser ein entsprechendes Signal ausgebenden Wasserstandssensoren 54, 56, welche gleichermaßen mit einem Schwimmer, als Temperatursensoren oder als Feuchtigkeitssensoren ausgebildet sein können, geben entsprechende Sensorsignale in ein Steuergerät 58 des Fahrzeugs 12 ein. Dieses Steuergerät 58 kann auf der Grundlage der von den Wasserstandssensoren 54, 56 gelieferten Signale eine Watzustandsinformation bereitstellen und in ein Fahrzeugdatenbussystem 60 einspeisen. Über das Fahrzeugdatenbussystem 60 können verschiedene Systeme des Fahrzeugs 12 auf diese Information zugreifen, beispielsweise um bei Vorliegen dieser Information Lüftungsklappen zu schließen, die Fenster zu schließen und dergleichen, um das Eindringen von Wasser in den Fahrzeuginnenraum zu unterbinden. Auch die Ansteueranordnung 40 kann zum Datenaustausch mit dem Fahrzeugdatenbussystem 60 verknüpft sein und somit auf diese das Auftreten eines Watzustands indizierende Information im Fahrzeugdatenbussystem 60 zugreifen und dementsprechend bei Vorliegen dieser Information das Heizgerät 16 in den Watbetrieb versetzen.

Das Steuergerät 58 stellte somit die oder einen Teil der Watzustandserzeugungsanordnung 42 bereit. Die Sensorsignale der Wasserstandssensoren 54, 56 liefern die wesentliche Grundlage für die durch das Steuergerät 58 in das Fahrzeugdatenbussystem 60 eingespeiste Information. Somit kann im Sinne der vorliegenden Erfindung eine Watzustandsinformation direkt bereitgestellt sein durch ein derartiges Sensorsignal, das beispielsweise in der Ansteueranordnung 40 entsprechende Ansteuermaßnahmen auslöst, kann jedoch auch bereitgestellt sein durch eine durch Auswertung eines Sensorsignals eines auch oder ausschließlich als Watzustandssensor wirksamen Sensors beispielsweise in der Ansteueranordnung 40 oder dem Steuergerät 58 bereitgestellte Information.

Bei dem erfindungsgemäßen Fahrzeugheizsystem 10 bzw. dem Verfahren zum Betreiben desselben wird dadurch, dass im Watbetrieb das Verbrennungsluftgebläse 20 zum Fördern von Verbrennungsluft bzw. allgemein Luft durch das Heizgerät 16 und somit auch die Abgasanlage 34 desselben angesteuert wird, ein Gegendruck aufgebaut, welcher das Eindringen von Wasser bis in den Bereich des Brennerbereichs 18 verhindern kann. Die Gefahr, dass dabei über den Verbrennungslufteintrittsbereich 22 auch Wasser in das Verbrennungsluftgebläse 20 und somit über dieses in das Heizgerät 16 eindringen könnte, ist daher im Allgemeinen ausgeschlossen, da wie in Fig. 1 in prinzipieller Art und Weise angedeutet, der Verbrennungslufteintrittsbereich 22 in einer Höhenrichtung H, welche im Allgemeinen einer Vertikalrichtung entspricht, deutlich höher positioniert ist, als der Abgasaustrittsbereich 32 des Heizgeräts 16 bzw. der Abgasaustrittsbereich 38 des Abgasanlage 34, der beispielsweise auf einem dem Niveau des Unterbodens 48 entsprechenden Höhenniveau positioniert sein kann. Beispielsweise kann dabei der Verbrennungslufteintrittsbereich 22 in der Höhenrichtung H so positioniert sein, dass er über eine für einen zulässigen Watbetrieb des Fahrzeugs 12 maximal zu erwartenden Wasserpegel liegt.

## Patentansprüche

1. Fahrzeugheizsystem, umfassend ein brennstoffbetriebenes Heizgerät (16) mit einem Brennerbereich (18), einem Verbrennungsluftgebläse (20) zum Fördern von Verbrennungsluft zu dem Brennerbereich (18), einer Brennstoffpumpe (26) zum Fördern von Brennstoff (18) zu dem Brennerbereich und einer Ansteueranordnung (40) zum Ansteuern des Verbrennungsluftgebläses (20) und der Brennstoffpumpe (26), wobei die Ansteueranordnung (40) dazu ausgebildet ist, bei Empfang einer Watzustandsinformation das Verbrennungsluftgebläse (20) und die Brennstoffpumpe (26) zur Durchführung eines Watbetriebs anzusteuern, wobei wenigstens eine Watzustandsinformationserzeugungsanordnung (42) zur Erzeugung und Eingabe der Watzustandsinformation in die Ansteueranordnung (40) vorgesehen ist, wobei die Watzustandsinformationserzeugungsanordnung (42) wenigstens einen Watzustandssensor (46) umfasst, **dadurch gekennzeichnet, dass** wenigstens ein Watzustandssensor (46) einen Wasserstandssensor (50) umfasst, oder/und dass ein Watzustandssensor (46) einen eine Temperatur von Verbrennungsabgasen erfassenden und ein Information über das Vorhandensein oder die Qualität eines Verbrennungszustandes wiedergebendes Temperatursignal ausgebenden Temperatursensor des Heizgeräts (16) umfasst.

2. Fahrzeugheizsystem nach Anspruch 1, **dadurch gekennzeichnet, dass** die Ansteueranordnung (40) dazu ausgebildet ist, zur Durchführung des Watbetriebs das Verbrennungsluftgebläse (20) zum Betrieb mit einer Watbetriebsdrehzahl oder/und einer Watbetriebsförderrate anzusteuern und die Brennstoffpumpe (26) außer Betrieb zu setzen oder/und außer Betrieb zu halten.

3. Fahrzeugheizsystem nach Anspruch 1 oder 2, **dadurch gekennzeichnet, dass** wenigstens ein Wasserstandssensor (50) im Bereich eines Abgasaustrittsbereichs (38) einer dem Heizgerät (16) zugeordneten Abgasanlage (34) angeordnet ist oder/und wenigstens ein Wasserstandssensor (54) in einem Frontbereich (14) eines Fahrzeugs (12) oder/und wenigstens ein Wasserstandssensor (56) in einem Heckbereich (18) eines Fahrzeugs (10) angeordnet ist.

4. Fahrzeugheizsystem nach einem der Ansprüche 1-3, **dadurch gekennzeichnet, dass** ein einen Watzustandssensor (46) bereitstellender, eine Temperatur von Verbrennungsabgasen erfassender und ein Information über das Vorhandensein oder die Qualität eines Verbrennungszustandes wiedergebendes Temperatursignal ausgebender Temperatursensor im Bereich eines Abgasaustrittsbereichs (32) des Heizgeräts (16) angeordnet ist oder/und ein einen Watzustandssensor (46) bereitstellender, eine Temperatur von Verbrennungsabgasen erfassender und ein Information über das Vorhandensein oder die Qualität eines Verbrennungszustandes wiedergebendes Temperatursignal ausgebender Temperatursensor im Bereich eines Abgasaustrittsbereichs (38) einer Abgasanlage (34) des Heizgeräts (36) angeordnet ist.

5. Fahrzeugheizsystem nach einem der Ansprüche 1-4, **dadurch gekennzeichnet,**
**dass** die Watzustandsinformationserzeugungsanordnung (42) wenigstens einen durch eine Bedienperson betätigbaren Watzustandsschalter (44) umfasst,
oder/und
**dass** die Watzustandsinformationserzeugungsanordnung (42) ein die Watzustandsinformation in ein Fahrzeugdatenbussystem (60) einspeisendes Fahrzeugsteuergerät (58) umfasst.

6. Verfahren zum Betreiben eines Fahrzeugheizsystems, vorzugsweise nach einem der vorangehenden Ansprüche, das Fahrzeugheizsystem (10) umfassend ein brennstoffbetriebenes Heizgerät (16) mit einem Brennerbereich (18), einem Verbrennungsluftgebläse (20) zum Fördern von Verbrennungsluft zu dem Brennerbereich (18), einer Brennstoffpumpe (26) zum Fördern von Brennstoff zu dem Brennerbereich (18) und einer Ansteueranordnung (40) zum Ansteuern des Verbrennungsluftgebläses (20) und der Brennstoffpumpe (26), umfassend die Maßnahmen:
a) Erzeugen einer einen vorliegenden oder geplanten Watzustand eines Fahrzeugs (12) indizierenden Watzustandsinformation und Eingeben der Watzustandsinformation in die Ansteueranordnung (40),
b) nach Empfang oder/und Verarbeitung der Watzustandsinformation in der Ansteueranordnung (40), Ansteuern des Verbrennungsluftgebläses (20) und der Brennstoffpumpe (26) zur Durchführung eines Watbetriebs,
wobei bei der Maßnahme a) die Watzustandsinformation durch wenigstens einen einen Wasserstand im Bereich eines Fahrzeugs (12) erfassenden Wasserstandssensor (50) erzeugt wird,
oder/und
wobei bei der Maßnahme a) die Watzustandsinformation durch einen eine Temperatur von Verbrennungsabgasen erfassenden und ein Information über das Vorhandensein oder die Qualität eines Verbrennungszustandes wiedergebendes Temperatursignal ausgebenden Temperatursensor des Heizgeräts (16) erzeugt wird.

7. Verfahren nach Anspruch 6, **dadurch gekennzeichnet,**
**dass** bei der Maßnahme b) das Verbrennungsluftgebläse (20) mit einer Watbetriebsdrehzahl oder/und einer Watbetriebsförderrate betrieben wird und die Brennstoffpumpe (26) außer Betrieb gesetzt oder/und außer Betrieb gehalten wird,
oder/und
**dass** bei der Maßnahme a) die Watzustandsinformation durch Betätigung eines Watzustandsschalters (44) erzeugt wird.

8. Verfahren nach Anspruch 6 oder 7, **dadurch gekennzeichnet, dass** die zeitliche Entwicklung des eine Temperatur im Bereich des Temperatursensors wiedergebenden Temperatursignals derart ausgewertet wird, dass dann, wenn ein Gradient des Temperatursignals einen vorbestimmten negativen Schwellenwert unterschreitet, das Vorliegen eines Watzustands erkannt wird.

9. Fahrzeug, umfassend ein Fahrzeugheizsystem (10) nach einem der Ansprüche 1-5, wobei das Fahrzeugheizsystem (10) vorzugsweise mit einem Verfahren nach einem der Ansprüche 6-8 betreibbar ist.

10. Fahrzeug nach Anspruch 9, **dadurch gekennzeichnet, dass** ein Verbrennungslufteintrittsbereich (22) des Verbrennungsluftgebläses (20) in einer Höhenrichtung (H) über einem Abgasaustrittsbereich (32) des Brennerbereichs (18) oder/und einem Abgasaustrittsbereich (38) einer dem Heizgerät (16) zugeordneten Abgasanlage (34) angeordnet ist.

## Claims

1. Vehicle heating system, comprising a fuel-operated heater (16) with a burner area (18), with a combustion air blower (20) for feeding combustion air to the burner area (18), with a fuel pump (26) for feeding fuel (18) to the burner area and with an actuating device (40) for actuating the combustion air blower (20) and the fuel pump (26), wherein the actuating device (40) is configured to actuate the combustion air blower (20) and the fuel pump (26) to carry out a fording operation upon receipt of fording state information, wherein at least one fording state information generation device (42) is provided for generating and entering the fording state information into the actuating device (40), wherein the fording state information generation device (42) comprises at least one fording state sensor (46), **characterized in that** at least one fording state sensor (46) comprises a water level sensor (50), or/and **in that** a fording state sensor (46) comprises a temperature sensor of the heater (16) detecting a temperature of combustion exhaust gases and outputting a temperature signal representing information on the presence or quality of a combustion state.

2. Vehicle heating system in accordance with claim 1, **characterized in that** the actuating device (40) is configured to actuate the combustion air blower (20) to operate at a fording operation speed or/and at a fording operation feed rate and to put the fuel pump (26) out of operation or/and to keep it out of operation to carry out the fording operation.

3. Vehicle heating system in accordance with claim 1 or 2, **characterized in that** at least one water level sensor (50) is arranged in the area of an exhaust gas outlet area (38) of an exhaust system (34) associated with the heater (16), or/and that at least one water level sensor (54) is arranged in a front area (14) of a vehicle (12) or/and at least one water level sensor (56) is arranged in a rear area (18) of a vehicle (10).

4. Vehicle heating system in accordance with one of claims 1 to 3, **characterized in that** a temperature sensor which provides a fording state sensor (46), detects a temperature of combustion exhaust gases and outputs a temperature signal indicating the presence or quality of a combustion state is arranged in the region of an exhaust gas outlet region (32) of the heater (16), or/and a temperature sensor which provides a fording state sensor (46), detects a temperature of combustion exhaust gases and outputs an information signal about the presence or quality of a combustion state is arranged in the region of an exhaust gas outlet region (38) of an exhaust gas system (34) of the heater (36).

5. Vehicle heating system in accordance with one of claims 1 to 4, **characterized**
**in that** the fording state information generation device (42) comprises at least one fording state switch (44) that can be actuated by a human operator,
or/and
**in that** the fording state information generation device (42) comprises a vehicle control device (58) feeding fording state information into a vehicle data bus system (60).

6. Process for operating a vehicle heating system, preferably in accordance with one of the above claims, wherein the vehicle heating system (10) comprises a fuel-operated heater (16) with a burner area (18), with a combustion air blower (20) for feeding combustion air to the burner area (18), with a fuel pump (26) for feeding fuel to the burner area (18) and with an actuating device (40) for actuating the air blower (20) and the fuel pump (26), comprising the steps of:
a) generating fording state information indicating an existing or planned fording state of a vehicle (12) and entering the fording state information into the actuating device (40),
b) upon receipt or/and processing of the fording state information in the actuating device (40), actuating the combustion air blower (20) and the fuel pump (26) to carry out a fording operation,
wherein in step a) the fording state information is generated by at least one water level sensor (50) detecting a water level in the area of a vehicle (12),
or/and
wherein in step a) the fording state information is generated by a temperature sensor of the heater (16) detecting a temperature of combustion exhaust gases and outputting a temperature signal representing information on the presence or quality of a combustion state.

7. Process in accordance with claim 6, **characterized in that**
the combustion air blower (20) is operated during step b) at a fording operation speed or/and at a fording operation feed rate and the fuel pump (26) is put out of or/and kept out of operation during step b),
or/and
**characterized in that** in step a) the fording state information is generated by actuating a fording state switch (44).

8. Process in accordance with claim 6 or 7, **characterized in that** the temporal development of the temperature signal representing a temperature in the region of the temperature sensor is evaluated in such a way that, when a gradient of the temperature signal falls below a predetermined negative threshold value, the presence of a fording state is recognized.

9. Vehicle, comprising a vehicle heating system (10) in accordance with one of the claims 1 to 5, wherein the vehicle heating system (10) is operated preferably with a process in accordance with one of the claims 6 to 8.

10. Vehicle in accordance with claim 9, **characterized in that** a combustion air inlet area (22) of the combustion air blower (20) is arranged in a vertical direction (H) above a waste gas outlet area (32) of the burner area (18) or/and above an exhaust gas outlet area (38) of an exhaust system (34) associated with the heater (16).

## Revendications

1. Système de chauffage de véhicule, comprenant un chauffage à combustible (16) avec une zone de brûleur (18), une soufflerie d'air de combustion (20) pour alimenter la zone de brûleur (18) en air de combustion, une pompe à combustible (26) pour alimenter la zone de brûleur en combustible (18) et avec un dispositif d'actionnement (40) pour actionner la soufflerie d'air de combustion (20) et la pompe à combustible (26), dans lequel le dispositif d'actionnement (40) est configuré pour actionner la soufflerie d'air de combustion (20) et la pompe à combustible (26) pour effectuer une opération de mouillage à la réception d'informations sur l'état de mouillage, dans lequel au moins un dispositif de génération d'informations sur l'état de mouillage (42) est prévu pour générer et entrer les informations sur l'état de mouillage dans le dispositif d'actionnement (40), dans lequel le dispositif de génération d'informations sur l'état de mouillage (42) comprend au moins un capteur d'état de mouillage (46), **caractérisé en ce qu'**au moins un capteur d'état de mouillage (46) comprend un capteur de niveau d'eau (50), ou/et **en ce qu'**un capteur d'état de mouillage (46) comprend un capteur de température du chauffage (16) détectant une température des gaz d'échappement de combustion et émettant un signal de température représentant des informations sur la présence ou la qualité d'un état de combustion.

2. Système de chauffage de véhicule selon la revendication 1, **caractérisé en ce que** le dispositif d'actionnement (40) est configuré pour actionner la soufflerie d'air de combustion (20) afin qu'elle fonctionne à une vitesse d'opération de mouillage ou/et à un débit d'alimentation d'opération de mouillage et pour mettre la pompe à combustible (26) hors service ou/et pour la maintenir hors service afin d'effectuer l'opération de mouillage.

3. Système de chauffage de véhicule selon la revendication 1 ou 2, **caractérisé en ce qu'**au moins un capteur de niveau d'eau (50) est disposé dans la zone de sortie des gaz d'échappement (38) d'un système d'échappement (34) associé au chauffage (16), ou/et **en ce qu'**au moins un capteur de niveau d'eau (54) est disposé dans une zone avant (14) d'un véhicule (12) ou/et **en ce qu'**au moins un capteur de niveau d'eau (56) est disposé dans une zone arrière (18) d'un véhicule (10).

4. Système de chauffage de véhicule selon les revendications 1 à 3, **caractérisé en ce qu'**un capteur de température fournissant un capteur d'état de mouillage (46), détectant une température de gaz d'échappement de combustion et émettant un signal de température indiquant la présence ou la qualité d'un état de combustion est disposé dans la région d'une zone de sortie de gaz d'échappement (32) du dispositif de chauffage (16), ou/et un capteur de température fournissant un capteur d'état de mouillage (46), détectant une température des gaz d'échappement de combustion et émettant un signal d'information sur la présence ou la qualité d'un état de combustion est disposé dans la région d'une zone de sortie des gaz d'échappement (38) d'un système de gaz d'échappement (34) du dispositif de chauffage (36).

5. Système de chauffage de véhicule selon l'une des revendications 1 à 4, **caractérisé en ce que**
le dispositif de génération d'informations sur l'état de mouillage (42) comprend au moins un commutateur d'état de de mouillage (44) qui peut être actionné par un opérateur humain,
ou/et
**en ce que** le dispositif de génération d'informations sur l'état de mouillage (42) comprend un dispositif de commande du véhicule (58) qui transmet des informations sur l'état de mouillage à un système de bus de données du véhicule (60).

6. Procédé pour opérer un système de chauffage de véhicule, de préférence selon l'une des revendications précédentes, le système de chauffage de véhicule (10) comprenant un chauffage à combustible (16) avec une zone de brûleur (18), une soufflerie d'air de combustion (20) pour alimenter la zone de brûleur (18) en air de combustion, une pompe à combustible (26) pour alimenter la zone de brûleur (18) en combustible et un dispositif d'actionnement (40) pour actionner la soufflerie d'air (20) et la pompe à combustible (26), comprenant les étapes consistant à :
a) générer une information sur l'état de mouillage indiquant un état de mouillage existant ou prévu d'un véhicule (12) et entrer les informations sur l'état de mouillage dans le dispositif d'actionnement (40), et
b) sur réception ou/et traitement de l'information relative à l'état de mouillage dans le dispositif d'actionnement (40), actionner la soufflerie d'air de combustion (20) et la pompe à combustible (26) pour effectuer une opération de mouillage,
dans lequel à l'étape a) l'information sur l'état de mouillage est générée par au moins un capteur de niveau d'eau (50) détectant un niveau d'eau dans la zone d'un véhicule (12),
ou/et
dans lequel, à l'étape a), l'information sur l'état de mouillage est générée par un capteur de température du chauffage (16) détectant la température des gaz d'échappement de combustion et émettant un signal de température représentant une information sur la présence ou la qualité d'un état de combustion.

7. Procédé selon la revendication 6, **caractérisé en ce que**
à l'étape b) la soufflerie d'air de combustion (20) fonctionne à une vitesse d'opération de mouillage ou/et à un débit d'alimentation d'opération de mouillage et que la pompe à combustible (26) est mise hors service ou/et maintenue hors service,
ou/et
**en ce que** à l'étape a) l'information sur l'état de mouillage est générée par l'actionnement d'un commutateur d'état de mouillage (44).

8. Procédé selon la revendication 6 ou 7, **caractérisé en ce que** l'évolution temporelle du signal de température représentant une température dans la région du capteur de température est évaluée de telle sorte que, si un gradient du signal de température tombe en dessous d'une valeur seuil négative prédéterminée, la présence d'un état de mouillage est détectée.

9. Véhicule comprenant un système de chauffage de véhicule (10) selon l'une des revendications 1 à 5, dans lequel le système de chauffage de véhicule (10) peut être opéré par un procédé selon l'une des revendications 6 à 8.

10. Véhicule selon la revendication 9, **caractérisé en ce qu'**une zone d'entrée d'air de combustion (22) de la soufflerie d'air de combustion (20) est disposée au-dessus d'une zone de sortie de gaz d'échappement (32) de la zone du brûleur (18) ou/et au-dessus d'une zone de sortie des gaz d'échappement (38) d'un système d'échappement (34) associé au chauffage (16) dans une direction verticale (H).
